# EUROPEAN PATENT SPECIFICATION

(11) **EP 3 763 681 B1**
(45) Date of publication and mention of the grant of the patent: **13.04.2022**
(21) Application number: 20185116.9
(22) Date of filing: 10.07.2020
(51) Int. Cl.: C02F 1/52, C22B 3/08, C22B 19/00, C02F 1/66, C02F 1/56, C02F 101/20, C02F 103/16, B03B 5/62

(54) **SYSTEM AND METHOD FOR TREATING ZINC-CONTAINING WASTE LIQUID**
SYSTEM UND VERFAHREN ZUR BEHANDLUNG VON ZINKHALTIGER ABFALLFLÜSSIGKEIT
SYSTÈME ET PROCÉDÉ DE TRAITEMENT DE DÉCHETS LIQUIDES CONTENANT DU ZINC

(30) Priority: 11.07.2019 CN 201921089980 U; 11.07.2019 CN 201910625804
(43) Date of publication of application: 13.01.2021
(73) Proprietor: China Enfi Engineering Corporation, Beijing 100038 (CN)
(72) Inventor: Liu, Suning, Beijing, 100038, (CN); Sun, Ninglei, Beijing, 100038 (CN); Peng, Jianhua, Beijing, 100038 (CN)
(74) Representative: Maiwald Patent- und Rechtsanwaltsgesellschaft mbH

(56) References cited:
- CA-A1- 2 506 780
- CN-A- 108 034 838
- US-A- 3 032 194
- US-A- 4 735 708

## Description

### FIELD

The present disclosure relates to the field of treating a zinc-containing waste liquid, and more particularly to a system and method for treating a zinc-containing waste liquid.

### BACKGROUND

Waste acids generated in the existing zinc hydrometallurgy process are meanly treated by lime neutralization, which results in a large amount of neutralized slag. The neutralized slag is a hazardous waste, and its treating cost is high. Besides some heavy metals, the slag contains a large amount of neutralized and precipitated zinc, which cannot be reused, resulting in a waste of resources. Some literatures proposed to use a two-stage method to treat the waste acid, in which a pH value at a first stage is lower than a pH value for the hydrolysis and precipitation of metal ions, and the product is pure gypsum; while at the second stage, the pH value is increased to precipitate the metal ions. However, many metal ions, like aluminum ion, ferric ion, zinc ion, *etc.,* are precipitated at a relatively low pH value, such as under acidic conditions, so the obtained gypsum has a limited purity and contains many heavy metal ions therein. In addition, there are other ways to treat the waste acid, such as electrocoagulation, biosorption, ferrite process, *etc.,* but none of them have been applied in engineering.

Zinc-containing waste liquid is an acidic waste liquid generated during wet purification, washing and defogging in a zinc smelting process, and heavy metals contained therein may be precipitated using sulfides or be neutralized and precipitated by hydroxides, but most of the existing methods are only for the purpose of meeting wastewater discharge standards, without taking into account the recovery of valuable metals, or the recovery cost is high. CN 108 034 838 A relates to a zinc containing waste liquid treatment process. CA 2 506 780 A1 relates to an apparatus and a process for producing zinc oxide from an acid soluble zinc-bearing material.

Therefore, the current technology for treating the zinc-containing waste liquid needs to be further improved.

### SUMMARY

Embodiments of the present disclosure seek to solve at least one of the problems existing in the related art to at least some extent. For this, an objective of embodiments of the present disclosure is to provide a system and method for treating a zinc-containing waste liquid. This system realizes efficient gradation of zinc hydroxide and calcium sulfate with different particle sizes, and realizes the recovery of zinc after sedimentation and filtration. Moreover, the whole process is simple, can be continuously performed, and easy to realize industrialization.

In a first aspect, the invention provides a system for treating a zinc-containing waste liquid. The system includes:
a neutralization device, having a zinc-containing waste liquid inlet, a neutralizer inlet and a mixed slurry outlet;
a grading device, including from top to bottom:
   an upper column, having an open top and including:
      a mixed slurry feeding pipe, extending from the top of the upper column into an interior of the upper column, and connected to the mixed slurry outlet;
      an overflow trough, disposed at an outer sidewall of an upper part of the upper column; and
      a zinc hydroxide slurry outlet, disposed at a bottom of the overflow trough;
   a bottom column, including:
      a rotary water inlet pipe, disposed to be tangent to a sidewall of a lower part of the bottom column; and
      a calcium sulfate slurry outlet, disposed above the rotary water inlet pipe in a height direction, and a discharge direction of the calcium sulfate slurry outlet being tangent to a sidewall of an upper part of the bottom column; and
   a transition column, connecting upper column and the bottom column; and
a sedimentation-filtration unit, having a zinc hydroxide slurry inlet, a flocculant inlet, a zinc-rich slag outlet and a filtered liquid outlet, and the zinc hydroxide slurry inlet being connected to the zinc hydroxide slurry outlet.

With the system for treating the zinc-containing waste liquid according to embodiments of the present disclosure, after the acidic zinc-containing waste liquid reacts with the neutralizer, the mixed slurry containing zinc hydroxide and calcium sulfate can be obtained, which is fed to the upper column through the mixed slurry feeding pipe, at the same time, water is fed to the bottom column through the rotary water inlet pipe. Because the rotary water inlet pipe is disposed to be tangent to the sidewall of the lower part of the bottom column, the water enters the bottom column along a tangent line of an inner sidewall of the bottom column and forms a vortex flow upward, and is mixed with the mixed slurry. The solid calcium sulfate particles with a larger specific gravity or particle size in the mixed slurry are settled downwards and finally discharged from the calcium sulfate slurry outlet; while the zinc hydroxide particles with a smaller specific gravity or particle size move upwards along with the water flow rotated upwards, overflow from the top of the upper column and enter the overflow trough, and finally are discharged from the zinc hydroxide slurry outlet. After the obtained zinc hydroxide slurry is further flocculated, precipitated and filtered, the zinc-rich slag is obtained, thereby achieving the recovery of zinc. Therefore, the system according to embodiments of the present disclosure realizes efficient gradation of zinc hydroxide and calcium sulfate with different particle sizes, and realizes the recovery of zinc after sedimentation and filtration. Moreover, the whole process is simple, can be continuously performed, and easy to realize industrialization.

In some embodiments of the present disclosure, in the height direction, an outer sidewall of the overflow trough is higher than the outer sidewall of the upper column. Therefore, the gradation and recovery of a mixed slurry with a smaller specific gravity or particle size may be further achieved.

According to the invention a height-diameter ratio of the upper column is in a range of 5:1 to 25:1. Therefore, the grading effect of the system and method for treating the zinc-containing waste liquid may be further improved.

In some embodiments of the present disclosure, in the height direction, a distance between a bottom of the mixed slurry feeding pipe and the top of the upper column is 75 to 80% of a height of the upper column. Therefore, the grading effect of the grading device for the mixed slurry may be further improved.

In some embodiments of the present disclosure, a height-diameter ratio of the upper column is 10:1. Therefore, the grading effect of the system and method for treating the zinc-containing waste liquid may be further improved.

According to the invention a diameter ratio of the upper column to the bottom column is in a range of 1.2:1 to 2:1. Therefore, the grading efficiency of the system and method for treating the zinc-containing waste liquid may be further improved.

According to the invention a cross-sectional area of the transition column decreases gradually from top to bottom. Therefore, the grading efficiency of the system and method for treating the zinc-containing waste liquid may be further improved.

In some embodiments of the present disclosure, an angle of a sidewall of the transition column relative to a vertical direction is in a range of 25° to 35°. Therefore, the grading efficiency of the system and method for treating the zinc-containing waste liquid may be further improved.

In some embodiments of the present disclosure, the upper column further includes a midstream outlet located at a sidewall of the upper column and below the zinc hydroxide slurry outlet in the height direction. Therefore, a mixed slurry having a specific gravity or particle size within another range can be obtained, so as to further realize the multi-level gradation of the mixed slurry.

In some embodiments of the present disclosure, the upper column includes a plurality of the midstream outlets spaced apart from each other on the upper column. Therefore, the multi-level gradation of the mixed slurry is further achieved, thereby improving the grading efficiency.

In some embodiments of the present disclosure, the plurality of the midstream outlets are spaced apart from each other in the height direction of the upper column. Therefore, the multi-level gradation of the mixed slurry is further achieved, thereby improving the grading efficiency.

In some embodiments of the present disclosure, an angle between a projection of the rotary water inlet pipe on a horizontal plane and a projection of the calcium sulfate slurry outlet on the horizontal plane is in a range of 0° to 360°. Therefore, the grading efficiency of the system and method for treating the zinc-containing waste liquid may be further improved.

In some embodiments of the present disclosure, an angle between a projection of the rotary water inlet pipe on a horizontal plane and a projection of the calcium sulfate slurry outlet on the horizontal plane is 180°. Therefore, the grading efficiency of the system and method for treating the zinc-containing waste liquid may be further improved.

In some embodiments of the present disclosure, the upper column includes a plurality of sub-columns connected by flanges. Therefore, the height of the upper column may be adjusted by increasing or decreasing the number of the sub-columns, so as to flexibly meet grading requirements of mixed slurries of different specific gravity or particle size.

In some embodiments of the present disclosure, the upper column further includes a water supplementing pipe extending into the interior of the upper column and having an opening facing downward, the water supplementing pipe is located below a bottom of the mixed slurry feeding pipe. Therefore, the grading effect of the system and method for treating the zinc-containing waste liquid may be further improved.

In some embodiments of the present disclosure, the water supplementing pipe is located directly below the bottom of the mixed slurry feeding pipe. Therefore, the grading effect of the system and method for treating the zinc-containing waste liquid may be further improved.

The invention also provides a method for treating a zinc-containing waste liquid using the system as described above. The method includes:
(1) feeding the zinc-containing waste liquid and a neutralizer into the neutralization device for neutralization treatment to obtain a mixed slurry;
(2) feeding the mixed slurry into the grading device for grading treatment to obtain a zinc hydroxide slurry and a calcium sulfate slurry; and
(3) feeding the zinc hydroxide slurry and a flocculant into the sedimentation-filtration unit for sedimentation and filtration treatments in sequence to obtain a zinc-rich slag and a filtered liquid.

With the method for treating the zinc-containing waste liquid according to embodiments of the present disclosure, after the acidic zinc-containing waste liquid reacts with the neutralizer, the mixed slurry containing zinc hydroxide and calcium sulfate can be obtained, which is fed to the upper column through the mixed slurry feeding pipe, at the same time, water is fed to the bottom column through the rotary water inlet pipe. Because the rotary water inlet pipe is disposed to be tangent to the sidewall of the lower part of the bottom column, the water enters the bottom column along a tangent line of an inner sidewall of the bottom column and forms a vortex flow upward, and is mixed with the mixed slurry. The solid calcium sulfate particles with a larger specific gravity or particle size in the mixed slurry are settled downwards and finally discharged from the calcium sulfate slurry outlet; while the zinc hydroxide particles with a smaller specific gravity or particle size move upwards along with the water flow rotated upwards, overflow from the top of the upper column and enter the overflow trough, and finally are discharged from the zinc hydroxide slurry outlet. After the obtained zinc hydroxide slurry is further flocculated, precipitated and filtered, the zinc-rich slag is obtained, thereby achieving the recovery of zinc. Therefore, the method according to embodiments of the present disclosure realizes efficient gradation of the zinc hydroxide and calcium sulfate with different particle sizes, and realizes the recovery of zinc after sedimentation and filtration. Moreover, the whole process is simple, can be continuously performed, and easy to realize industrialization.

In addition, the method for treating the zinc-containing waste liquid according to embodiments of the present disclosure may further have the following additional technical features.

In some embodiments of the present disclosure, in step (1), the zinc-containing waste liquid has a zinc content ranging from 120 to 180 g/L.

In some embodiments of the present disclosure, in step (1), the zinc-containing waste liquid has a pH value ranging from 0.5 to 5.0.

In some embodiments of the present disclosure, in step (2), zinc hydroxide in the zinc hydroxide slurry has a particle size of lower than 20.0 µm.

In some embodiments of the present disclosure, in step (2), calcium sulfate in the calcium sulfate slurry has a particle size of greater than 30.0 µm.

In some embodiments of the present disclosure, in step (3), the flocculant is added in an amount of 10 to 50 g per 1 t of the zinc-containing waste liquid.

Additional aspects and advantages of embodiments of present disclosure will be given in part in the following description.

### BRIEF DESCRIPTION OF THE DRAWINGS

These and/or other aspects and advantages of embodiments of the present disclosure will become apparent and more readily appreciated from the following descriptions made with reference to the drawings, in which:
Fig. 1 is a schematic diagram of a system for treating a zinc-containing waste liquid according to an embodiment of the present disclosure;
Fig. 2 is a schematic diagram of a grading device according to an embodiment of the present disclosure;
Fig. 3 is a schematic diagram of a grading device according to an embodiment of the present disclosure;
Fig. 4 is a schematic diagram of a system for treating a zinc-containing waste liquid according to an embodiment of the present disclosure;
Fig. 5 is a schematic diagram of a grading device according to an embodiment of the present disclosure;
Fig. 6 is a top view of a rotary water inlet pipe and a calcium sulfate slurry outlet according to an embodiment of the present disclosure; and
Fig. 7 is flow chart of a method for treating a zinc-containing waste liquid according to an embodiment of the present disclosure.

### DETAILED DESCRIPTION

Embodiments of the present disclosure will be described in detail below, examples of which are shown in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure, and shall not be construed to limit the present disclosure.

In the specification, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," axial," "radial," and "circumferential" should be construed to refer to the orientation or locations as then described or as shown in the drawings under discussion. These relative terms are only for convenience and simplification of description, but do not indicate or imply that the device, unit or element referred to must have a particular orientation, or be constructed or operated in a particular orientation, and thus shall not be construed to limit the present disclosure.

In addition, in the description of the present disclosure, a phrase of "a plurality of' means two or more than two, such as two or three, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications or interaction of two elements, which can be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature; while a first feature "below," "under," or "on bottom of' a second feature may include an embodiment in which the first feature is right or obliquely "below," "under," or "on bottom of' the second feature, or just means that the first feature is at a height lower than that of the second feature.

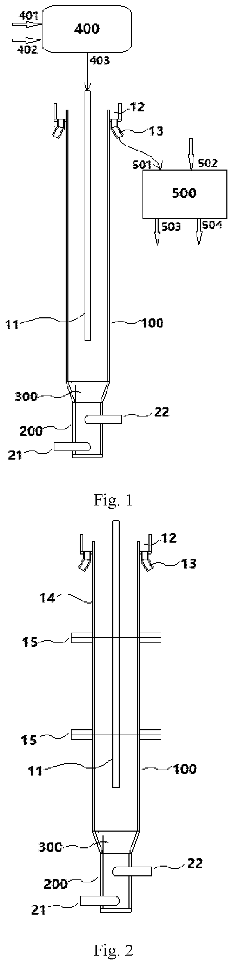

In an aspect of the present disclosure, embodiments of the present disclosure provide a system for treating a zinc-containing waste liquid. According to the invention, referring to Fig. 1 to Fig. 7, the system for treating the zinc-containing waste liquid includes a neutralization device 400, a grading device and a sedimentation-filtration unit 500.

The neutralization device 400 has a zinc-containing waste liquid inlet 401, a neutralizer inlet 402 and a mixed slurry outlet 403, and is configured to perform a neutralization reaction between the zinc-containing waste liquid and a neutralizer to obtain a mixed slurry containing zinc hydroxide and calcium sulfate. Specifically, the zinc-containing waste liquid is an acidic waste liquid generated during wet purification, washing and defogging in a zinc smelting process. In some embodiments of the present disclosure, the zinc-containing waste liquid has a zinc content ranging from 120 to 180 g/L, such as 120 g/L, 130 g/L, 140 g/L, 150 g/L, 160 g/L, 170 g/L, or 180g/L, and a pH value ranging from 0.5 to 5.0, such as 0.5, 1.0, 1.5, 2.0, 2.5, 3.0, 3.5, 4.0, 4.5, 5.0. The neutralizer may be such a substance that reacts with the zinc-containing waste liquid to produce zinc hydroxide and calcium sulfate, such as lime (calcium oxide), calcium carbide slag and the like. The addition amount of the neutralizer may be determined according to the zinc content in the zinc-containing waste liquid.

According to the invention, referring to Fig. 1 to Fig. 5, from top to bottom, the grading device includes an upper column 100, a bottom column 200 and a transition column 300.

The upper column 100 has an open top, and includes a mixed slurry feeding pipe 11, an overflow trough 12 and a zinc hydroxide slurry outlet 13. Specifically, the mixed slurry feeding pipe 11 is connected to the mixed slurry outlet 403, and extends from the top of the upper column 100 into an interior of the upper column 100 and extends close to a bottom of the upper column 100. The overflow trough 12 is disposed at an outer sidewall of an upper part of the upper column 100. The zinc hydroxide slurry outlet 13 is disposed at a bottom of the overflow trough 12. The upper column 100 is configured to: convey the mixed slurry through the mixed slurry feeding pipe, collect a zinc hydroxide slurry overflowed and having a smaller specific gravity or particle size through the overflow trough, and discharge the zinc hydroxide slurry having the smaller specific gravity or particle size collected by the overflow trough through the zinc hydroxide slurry outlet. Specifically, the particle size of the zinc hydroxide particles is less than 20.0 µm. It should be illustrated that, the form in which the mixed slurry feeding pipe enters the upper column from the open top of the upper column is not particularly limited, which may be selected by those skilled in the art as required. For example, the mixed slurry feeding pipe may enter the upper column from a position of a central axis of the upper column or from a position parallel to the central axis of the upper column, or the mixed slurry feeding pipe may enter the upper column at a certain angle relative to the central axis of the upper column. Further, the mixed slurry feeding pipe may extend into the upper column by virtue of a fixing support disposed outside. The arrangement of the overflow trough is also not particularly limited, which may surround a part of the outer sidewall or the entire outer sidewall of the upper part of the upper column. The specific position, number and size of the zinc hydroxide slurry outlet at the bottom of the overflow trough are not particularly limited, which may be set by those skilled in the art as required, such as according to a flow rate of the zinc hydroxide slurry having a smaller specific gravity or particle size in the overflow trough.

In some embodiments of the present disclosure, in a height direction, an outer sidewall of the overflow trough 12 may be higher than the outer sidewall of the upper column 100, thereby preventing the zinc hydroxide slurry from overflowing from the overflow trough, and avoiding the waste of the zinc hydroxide slurry. It should be illustrated that the amount of the outer sidewall of the overflow trough higher than the outer sidewall of the upper column is not particularly limited, which may be selected by those skilled in the art as required, for example according to a volume of the overflow trough, an overflow amount of the zinc hydroxide slurry, and the flow rate of the zinc hydroxide slurry discharged from the zinc hydroxide slurry outlet.

In some embodiments of the present disclosure, in the height direction, a distance between a bottom of the mixed slurry feeding pipe 11 and the top of the upper column 100 is 75 to 80%, such as 75%, 76%, 77%, 78%, 79% or 80% of the height of the upper column 100. The inventors have found that, if such a ratio is too high, the bottom of the mixed slurry feeding pipe is closer to a calcium sulfate slurry outlet, a sedimentation path of the mixed slurry is shorter, and the zinc hydroxide particles may be mixed into the underflow and taken away; if such a ratio is too low, the bottom of the mixed slurry feeding pipe is closer to the overflow trough, resulting in that the heavy particles are too close to the overflow trough, and a small amount of the heavy calcium sulfate particles is discharged from the zinc hydroxide slurry outlet together with the light zinc hydroxide particles, and thus the quality of the light zinc hydroxide granule product is reduced. The inventors have unexpectedly found through a large number of experiments that, it is more suitable that in the height direction, the distance between the bottom of the mixed slurry feeding pipe 11 and the top of the upper column 100 is 75 to 80% of the height of the upper column 100, which may further improve the separating effect of the mixed slurry.

The upper column has a height-diameter ratio in the range of 5:1 to 25:1. For example, the height-diameter ratio of the upper column may be 5:1, 10:1, 15:1, 20:1, or 25:1, preferably 10:1. The inventors have found that, if the height-diameter ratio is too large, the upper column is too thin, and a flow velocity of the mixed slurry in the upper column increases, so that the heavy particles are easily brought to the overflow trough; while if the height-diameter ratio is too small, the upper column is short and thick, and the flow velocity of the mixed slurry in the upper column decreases, so that the light particles are easy to settle and discharge from the calcium sulfate slurry outlet. The inventors have unexpectedly found through a large number of experiments that, when the height-diameter ratio of the upper column is in the range of 5:1 to 25:1, a long enough flow path is provided so as to ensure that the solid particles contained in the mixed slurry can be effectively dispersed and graded after floating and settling. Moreover, when the height-diameter ratio of the upper column is 10:1, the grading effect of the grading device is significantly improved.

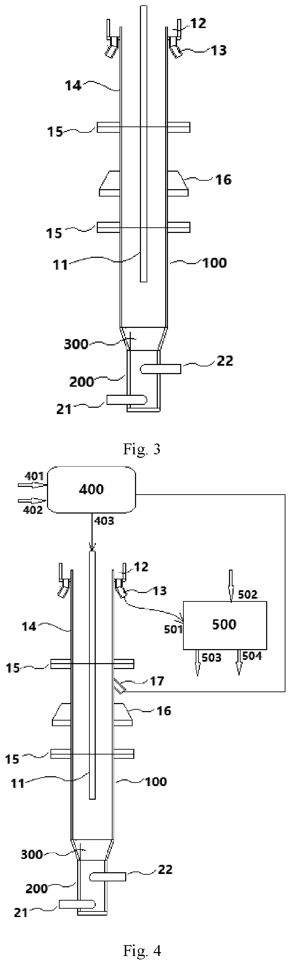

In some embodiments of the present disclosure, referring to Fig. 2, the upper column 100 may include a plurality of sub-columns 14 connected by flanges 15, and the flanges 15 may be clamped and sealed by rubber pads and bolts. In this way, the height of the upper column can be adjusted by increasing or decreasing the number of the sub-columns, so as to flexibly meet grading requirements of different mixed slurries. For example, when the particles in the mixed slurry are not significantly different in the specific gravity or the particle size, the grading effect of the mixed slurry can be improved by increasing the height of the upper column. Further, referring to Fig. 3, in order to make the upper column more stable during operation, a supporting frame 16 may be disposed on the outer wall of the upper column. Further, the material of the upper column is not particularly limited herein, which may be selected by those skilled in the art as required, for example, may be at least one selected from ordinary carbon steel, stainless steel, and organic glass.

In some embodiments of the present disclosure, referring to Fig. 4, the upper column 100 may further include a midstream outlet 17 located at the sidewall of the upper column 100 and below the zinc hydroxide slurry outlet 13 in the height direction. The midstream outlet 17 is connected to the neutralization device 400, and configured to effectively discharge calcium sulfate particles having a medium specific gravity and a medium particle size, and return these calcium sulfate particles to the neutralization device, so as to promote the growth of the calcium sulfate particles in the neutralization device. Therefore, the recovery of the medium-sized calcium sulfate particles may be achieved by a height difference from the zinc hydroxide slurry outlet. The particle size of the medium-sized calcium sulfate particles is in the range of 20.0 to 30.0 µm. Further, the upper column 100 may include a plurality of the midstream outlets 17 spaced apart from each other on the upper column. For example, the plurality of the midstream outlets 17 may be arranged along a same cross section of the upper column, so as to improve the recovery efficiency of the calcium sulfate slurry having a specific gravity or particle size corresponding to this position. The plurality of the midstream outlets 17 may also be arranged at different cross sections and different longitudinal sections, so as to obtain calcium sulfate slurries with different specific gravities or particle sizes, thereby improving the grading effects. Preferably, the plurality of the midstream outlets 17 may be spaced apart from each other in the height direction of the upper column 100, so that from each midstream outlet, the calcium sulfate slurry having a specific gravity or particle size within a respective range may be collected, thereby further improving the grading effects of the grading device. That is, through the plurality of the midstream outlets 17, the calcium sulfate of different particle sizes can be simultaneously separated, thereby satisfying the demand for the calcium sulfate of different particle sizes. Further, an angle of the midstream outlet relative to a horizontal plane is not particularly limited herein, which may be selected by those skilled in the art as required.

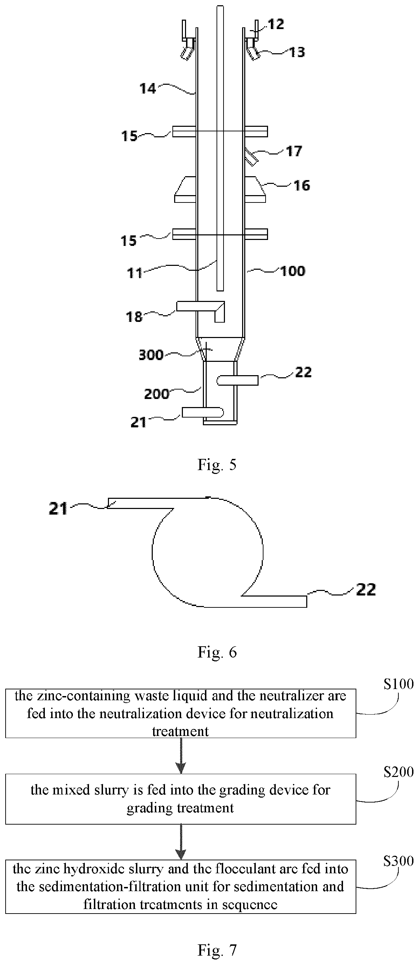

In some embodiments of the present disclosure, referring to Fig. 5, the upper column 100 may further include a water supplementing pipe 18. The water supplementing pipe 18 extends into the interior of the upper column 100 and its opening is downward, and the water supplementing pipe 18 is located below the bottom of the mixed slurry feeding pipe 11. The inventors have found that, when the difference in specific gravity of the solid particles in the mixed slurry is small, the water supplementing pipe may be opened to offset the settling velocity of light particles, so as to make the light particles rise, while the heavy particles keep settling. Further, the water supplementing pipe 18 is located directly below the bottom of the mixed slurry feeding pipe 11, so that the grading effect of the grading device can be further improved.

The bottom column 200 includes a rotary water inlet pipe 21 and a calcium sulfate slurry outlet 22, the rotary water inlet pipe 21 is disposed to be tangent to a sidewall of a lower part of the bottom column 200, the calcium sulfate slurry outlet 22 is disposed above the rotary water inlet pipe 21 in the height direction, and a discharge direction of the calcium sulfate slurry outlet 22 is tangent to a sidewall of an upper part of the bottom column 200. The bottom column 200 is configured to supply water from the rotary water inlet pipe to the system and method for treating the zinc-containing waste liquid, and discharge a continuously deposited calcium sulfate slurry having a larger specific gravity or particle size from the calcium sulfate slurry outlet. Specifically, the particle size of the calcium sulfate particles in the calcium sulfate slurry discharged from the calcium sulfate slurry outlet is greater than 30.0 µm. The rotary water inlet pipe is disposed to be tangent to the sidewall of the lower part of the bottom column, so that the water flow from the rotary water inlet pipe enters the bottom column along a tangent line of an inner sidewall of the bottom column, and the water flow has a power of upward vortex motion after entering the bottom column, thereby effectively driving the movement and dispersion of solid particles in the mixed slurry, and finally achieving the gradation. The discharge direction of the calcium sulfate slurry outlet is tangent to the sidewall of the upper part of the bottom column, and the calcium sulfate slurry outlet is located above the rotary water inlet pipe in the height direction, so that the continuously deposited calcium sulfate particles having a larger specific gravity or particle size may be effectively discharged from the calcium sulfate slurry outlet. Further, the material of the bottom column is not particularly limited herein, which may be selected by those skilled in the art as required, for example, may be at least one selected from ordinary carbon steel, stainless steel, and organic glass.

In some embodiments of the present disclosure, an angle between a projection of the rotary water inlet pipe 21 on the horizontal plane and a projection of the calcium sulfate slurry outlet 22 on the horizontal plane is in a range of 0° to 360°, which not only facilitates the entry of the water from the rotary water inlet pipe and the discharge of the mixed slurry having a larger specific gravity or particle size from the calcium sulfate slurry outlet, but also gives the structure high adaptability. Further, as shown in Fig. 6, the angle between the projection of the rotary water inlet pipe on the horizontal plane and the projection of the calcium sulfate slurry outlet on the horizontal plane is preferably 180°, thereby further improving the efficiency of discharging the calcium sulfate slurry having a greater specific gravity or particle size from the calcium sulfate slurry outlet.

A diameter ratio of the upper column 100 to the bottom column 200 is in a range of 1.2:1 to 2:1. The inventors have found that, the diameter of the bottom column is smaller than the diameter of upper column, which is beneficial to improve the vortex effect of the water entered from the rotary water inlet pipe and improve the dispersion effect of the mixed slurry, thereby making the solid particles in the mixed slurry dispersed as much as possible to improve the grading effect of the mixed slurry.

The transition column 300 connects the upper column 100 and the bottom column 200, and is configured to allow the water entered from the bottom column to move to the upper column. Specifically, a top of the transition column is connected to the bottom of the upper column, a bottom of the transition column is connected to a top of the bottom column, and the connection between the transition column and the bottom of the upper column and the connection between the transition column and the top of the bottom column may be achieved by welding. Further, the shape and structure of the transition column are not particularly limited, which may be selected by those skilled in the art as required. The transition column 300 has a structure whose cross-sectional area decreases gradually from top to bottom, that means the diameter of the bottom column is smaller than the diameter of the upper column, which is beneficial to improve the vortex effect of the water entered from the rotary water inlet pipe and improve the dispersion effect of the mixed slurry, thereby making the solid particles in the mixed slurry dispersed as much as possible to improve the grading effect of the mixed slurry. Such a structure also enables the water from the bottom column to smoothly move to the upper column. Further, an angle of a sidewall of the transition column 300 relative to a vertical direction is in a range of 25° to 35°, for example may be 25°, 26°, 27°, 28°, 29°, 30°, 31°, 32°, 33°, 34° or 35°. The inventors have found that, at such an angle, the water flow velocity is not excessively lost when the water flow moves upward from the bottom column to the upper column, which is advantageous for further improving the grading efficiency of the mixed slurry. Further, the material of the transition column is not particularly limited herein, which may be selected by those skilled in the art as required, for example, may be at least one selected from ordinary carbon steel, stainless steel, and organic glass.

The sedimentation-filtration unit 500 has a zinc hydroxide slurry inlet 501, a flocculant inlet 502, a zinc-rich slag outlet 503 and a filtered liquid outlet 504, and the zinc hydroxide slurry inlet 501 is connected to the zinc hydroxide slurry outlet 13. The sedimentation-filtration unit 500 is configured to perform a sedimentation reaction between the zinc hydroxide slurry and a flocculant, and filter the obtained mixture to obtain the zinc-rich slag and the filtered liquid. Specifically, the flocculant may be polyacrylamide (PAM) or polyaluminum chloride (PAC), and the flocculant may be added in an amount of 10 to 50 g, such as 10 g, 20 g, 30 g, 40 g, 50 g, per 1 t of the zinc-containing waste liquid. Further, the sedimentation-filtration unit may include a sedimentation device and a filtration unit in sequence, so as to perform a sedimentation treatment to the zinc hydroxide slurry and perform a filtration treatment to the settled slurry, respectively.

With the system for treating the zinc-containing waste liquid according to embodiments of the present disclosure, after the acidic zinc-containing waste liquid reacts with the neutralizer, the mixed slurry containing zinc hydroxide and calcium sulfate can be obtained, which is fed to the upper column through the mixed slurry feeding pipe, at the same time, water is fed to the bottom column through the rotary water inlet pipe. Because the rotary water inlet pipe is disposed to be tangent to the sidewall of the lower part of the bottom column, the water enters the bottom column along a tangent line of an inner sidewall of the bottom column and forms a vortex flow upward, and is mixed with the mixed slurry. The solid calcium sulfate particles with a larger specific gravity or particle size in the mixed slurry are settled downwards and finally discharged from the calcium sulfate slurry outlet; while the zinc hydroxide particles with a smaller specific gravity or particle size move upwards along with the water flow rotated upwards, overflow from the top of the upper column and enter the overflow trough, and finally are discharged from the zinc hydroxide slurry outlet. After the obtained zinc hydroxide slurry is further flocculated, precipitated and filtered, the zinc-rich slag is obtained, thereby achieving the recovery of zinc. Therefore, the system according to embodiments of the present disclosure realizes efficient gradation of zinc hydroxide and calcium sulfate with different particle sizes, and realizes the recovery of zinc after sedimentation and filtration. Moreover, the whole process is simple, can be continuously performed, and easy to realize industrialization.

In another aspect of the present disclosure, the invention provides a method for treating a zinc-containing waste liquid using the system as described hereinbefore. According to some embodiments of the present disclosure, the method includes the following acts as illustrated at blocks of Fig. 7.

At S100, the zinc-containing waste liquid and the neutralizer are fed into the neutralization device for neutralization treatment.

At this step, the zinc-containing waste liquid and the neutralizer are fed into the neutralization device for the neutralization treatment to obtain a mixed slurry. Specifically, the zinc-containing waste liquid is an acidic waste liquid generated during wet purification, washing and defogging in a zinc smelting process. In some embodiments of the present disclosure, the zinc-containing waste liquid has a zinc content ranging from 120 to 180 g/L, such as 120 g/L, 130 g/L, 140 g/L, 150 g/L, 160 g/L, 170 g/L, or 180g/L, and a pH value ranging from 0.5 to 5.0, such as 0.5, 1.0, 1.5, 2.0, 2.5, 3.0, 3.5, 4.0, 4.5, 5.0. The neutralizer may be such a substance that reacts with the zinc-containing waste liquid to produce zinc hydroxide and calcium sulfate, such as lime or calcium carbide slag and the like. The addition amount of the neutralizer may be determined according to the zinc content in the zinc-containing waste liquid.

At S200: the mixed slurry is fed into the grading device for grading treatment.

The mixed slurry is fed into the grading device for the grading treatment to obtain a zinc hydroxide slurry and a calcium sulfate slurry. Specifically, the mixed slurry contains zinc hydroxide particles having a particle size less than 20.0 µm and calcium sulfate particles having a particle size no less than 20.0 µm. The mixed slurry is fed to the upper column through the mixed slurry feeding pipe, at the same time, water is fed to the bottom column through the rotary water inlet pipe. Because the rotary water inlet pipe is disposed to be tangent to the sidewall of the lower part of the bottom column, the water enters the bottom column along a tangent line of an inner sidewall of the bottom column and forms a vortex flow upward, and is mixed with the mixed slurry. The solid calcium sulfate particles with a larger specific gravity or particle size in the mixed slurry are settled downwards and finally discharged from the calcium sulfate slurry outlet; while the zinc hydroxide particles with a smaller specific gravity or particle size move upwards along with the water flow rotated upwards, overflow from the top of the upper column and enter the overflow trough, and finally are discharged from the zinc hydroxide slurry outlet. When the grading device is provided with a midstream outlet, calcium sulfate particles with a medium particle size can be discharged from the midstream outlet and recovered to the neutralization device to promote the growth of calcium sulfate particles in the neutralization device. According to embodiments of the present disclosure, when a feeding velocity of the mixed slurry is in the range of 100 to 200 ml/min, and the flow velocity of the washing water fed from the rotary water inlet pipe is in the range of 50 to 100 ml/min, the particle size of the zinc hydroxide particles separated from the upper outlet is less than 20.0 µm; the particle size of the calcium sulfate particles separated from the midstream outlet is in the range of 20.0 to 30.0 µm, and these smaller calcium sulfate particles may be returned to the neutralization device to promote the growth of calcium sulfate; and the particle size of the calcium sulfate particles separated from the lower outlet is greater than 30.0 µm.

At S300: the zinc hydroxide slurry and the flocculant are fed into the sedimentation-filtration unit for sedimentation and filtration treatments in sequence.

At this step, the zinc hydroxide slurry and the flocculant are fed into the sedimentation-filtration unit for the sedimentation and filtration treatments in sequence to obtain a zinc-rich slag and a filtered liquid. Specifically, the flocculant may be PAM or PAC, and the addition amount of the flocculant may be 10 to 50 g, such as 10 g, 20 g, 30 g, 40 g, 50 g, per 1 t of the zinc-containing waste liquid.

With the method for treating the zinc-containing waste liquid according to embodiments of the present disclosure, after the acidic zinc-containing waste liquid reacts with the neutralizer, the mixed slurry containing zinc hydroxide and calcium sulfate can be obtained, which is fed to the upper column through the mixed slurry feeding pipe, at the same time, water is fed to the bottom column through the rotary water inlet pipe. Because the rotary water inlet pipe is disposed to be tangent to the sidewall of the lower part of the bottom column, the water enters the bottom column along a tangent line of an inner sidewall of the bottom column and forms a vortex flow upward, and is mixed with the mixed slurry. The solid calcium sulfate particles with a larger specific gravity or particle size in the mixed slurry are settled downwards and finally discharged from the calcium sulfate slurry outlet; while the zinc hydroxide particles with a smaller specific gravity or particle size move upwards along with the water flow rotated upwards, overflow from the top of the upper column and enter the overflow trough, and finally are discharged from the zinc hydroxide slurry outlet. After the obtained zinc hydroxide slurry is further flocculated, precipitated and filtered, the zinc-rich slag is obtained, thereby achieving the recovery of zinc. Therefore, the method according to embodiments of the present disclosure realizes efficient gradation of the zinc hydroxide and calcium sulfate with different particle sizes, and realizes the recovery of zinc after sedimentation and filtration. Moreover, the whole process is simple, can be continuously performed, and easy to realize industrialization. It should be illustrated that, the characteristics and advantages of the above-mentioned system for treating the zinc-containing waste liquid are also applicable to the method for treating the zinc-containing waste liquid, which will not be elaborated herein.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples. In addition, in the absence of contradiction, those skilled in the art can combine the different embodiments or examples described in this specification, or combine the features of different embodiments or examples.

Although explanatory embodiments have been shown and described above, it would be appreciated by those skilled in the art that the above embodiments are explanatory and cannot be construed to limit the present disclosure, and changes, alternatives, modifications and variants can be made in the embodiments without departing from the scope of the appended claims.

## Claims

1. A system for treating a zinc-containing waste liquid, comprising:
a neutralization device (400), having a zinc-containing waste liquid inlet (401), a neutralizer inlet (402) and a mixed slurry outlet (403);
a grading device, comprising from top to bottom:
an upper column (100), having an open top and comprising:
a mixed slurry feeding pipe (11), extending from the top of the upper column (100) into an interior of the upper column (100), and connected to the mixed slurry outlet (403);
an overflow trough (12), disposed at an outer sidewall of an upper part of the upper column (100); and
a zinc hydroxide slurry outlet (13), disposed at a bottom of the overflow trough (12);
a bottom column (200), comprising:
a rotary water inlet pipe (21), disposed to be tangent to a sidewall of a lower part of the bottom column (200); and
a calcium sulfate slurry outlet (22), disposed above the rotary water inlet pipe (21) in a height direction, and a discharge direction of the calcium sulfate slurry outlet (22) being tangent to a sidewall of an upper part of the bottom column (200); and
a transition column (300), connecting upper column (100) and the bottom column (200); and
a sedimentation-filtration unit (500), having a zinc hydroxide slurry inlet (501), a flocculant inlet (502), a zinc-rich slag outlet (503) and a filtered liquid outlet (504), and the zinc hydroxide slurry inlet (501) being connected to the zinc hydroxide slurry outlet (13);
wherein a height-diameter ratio of the upper column (100) is in a range of 5:1 to 25:1, preferably 10:1;
optionally, in the height direction, a distance between a bottom of the mixed slurry feeding pipe (11) and the top of the upper column (100) is 75 to 80% of a height of the upper column (100);
wherein a diameter ratio of the upper column (100) to the bottom column (200) is in a range of 1.2:1 to 2:1.
wherein a cross-sectional area of the transition column (300) decreases gradually from top to bottom;
optionally, an angle of a sidewall of the transition column (300) relative to a vertical direction is in a range of 25° to 35°.

2. The system according to claim 1, wherein in the height direction, an outer sidewall of the overflow trough (12) is higher than the outer sidewall of the upper column (100).

3. The system according to any one of claims 1 to 2, wherein the upper column (100) further comprises a midstream outlet (17) located at a sidewall of the upper column (100) and below the zinc hydroxide slurry outlet (13) in the height direction;
optionally, the upper column (100) comprises a plurality of the midstream outlets (17) spaced apart from each other on the upper column (100);
optionally, the plurality of the midstream outlets (17) are spaced apart from each other in the height direction of the upper column (100).

4. The system according to any one of claims 1 to 3, wherein an angle between a projection of the rotary water inlet pipe (21) on a horizontal plane and a projection of the calcium sulfate slurry outlet (22) on the horizontal plane is in a range of 0° to 360°, preferably 180°;
optionally, the upper column (100) comprises a plurality of sub-columns (14) connected by flanges (15).

5. The system according to any one of claims 1 to 4, wherein the upper column (100) further comprises a water supplementing pipe (18) extending into the interior of the upper column (100) and having an opening facing downward, the water supplementing pipe (18) is located below a bottom of the mixed slurry feeding pipe (11), preferably directly below the bottom of the mixed slurry feeding pipe (11).

6. The system according to any one of claims 1 to 5, wherein the upper column (100), the transition column (300) and the bottom column (200) each are made of at least one selected from ordinary carbon steel, stainless steel, and organic glass.

7. The system according to any one of claims 1 to 6, wherein the overflow trough (12) surrounds a part of the outer sidewall or the entire outer sidewall of the upper part of the upper column (100).

8. The system according to any one of claims 1 to 7, wherein the transition column (300) is connected to the upper column (100) by welding, and the transition column (300) is connected to the bottom column (200) by welding.

9. A method for treating a zinc-containing waste liquid using a system according to any one of claims 1 to 8, comprising:
(1) feeding the zinc-containing waste liquid and a neutralizer into the neutralization device for neutralization treatment to obtain a mixed slurry;
(2) feeding the mixed slurry into the grading device for grading treatment to obtain a zinc hydroxide slurry and a calcium sulfate slurry; and
(3) feeding the zinc hydroxide slurry and a flocculant into the sedimentation-filtration unit for sedimentation and filtration treatments in sequence to obtain a zinc-rich slag and a filtered liquid.

10. The method according to claim 9, wherein in step (1), the zinc-containing waste liquid has a zinc content ranging from 120 to 180 g/L;
optionally, in step (1), the zinc-containing waste liquid has a pH value ranging from 0.5 to 5.0;
optionally, in step (2), zinc hydroxide in the zinc hydroxide slurry has a particle size of lower than 20.0 µm;
optionally, in step (2), calcium sulfate in the calcium sulfate slurry has a particle size of greater than 30.0 µm;
optionally, in step (3), the flocculant is added in an amount of 10 to 50 g per 1 t of the zinc-containing waste liquid.

11. The method according to claim 9 or 10, wherein the neutralizer is lime or calcium carbide slag.

12. The method according to any one of claims 9 to 11, wherein the flocculant is polyacrylamide (PAM) or polyaluminum chloride (PAC).

## Patentansprüche

1. System zum Behandeln einer zinkhaltigen Abfallflüssigkeit, umfassend:
eine Neutralisierungsvorrichtung (400) mit einem Einlass (401) für zinkhaltige Abfallflüssigkeit, einem Neutralisatoreinlass (402) und einem Auslass (403) für gemischte Aufschlämmung;
eine Klassierungsvorrichtung, umfassend von oben nach unten:
eine obere Säule (100), die oben offen ist und Folgendes umfasst:
ein Zufuhrrohr (11) für gemischte Aufschlämmung, das sich von der Oberseite der oberen Säule (100) in ein Inneres der oberen Säule (100) erstreckt und mit dem Auslass (403) für gemischte Aufschlämmung verbunden ist,
eine Überlaufwanne (12), die an einer äußeren Seitenwand eines oberen Teils der oberen Säule (100) angeordnet ist, und
einen Zinkhydroxid-Aufschlämmungsauslass (13), der an einem Boden der Überlaufwanne (12) angeordnet ist,
eine untere Säule (200), umfassend:
ein Rotationswassereinlassrohr (21), das tangential zu einer Seitenwand eines unteren Teils der unteren Säule (200) angeordnet ist, und
einen Calciumsulfat-Aufschlämmungsauslass (22), der in einer Höhenrichtung über dem Rotationswassereinlassrohr (21) angeordnet ist und wobei eine Austrittsrichtung des Calciumsulfat-Aufschlämmungsauslasses (22) tangential zu einer Seitenwand eines oberen Teils der unteren Säule (200) verläuft, und
eine Übergangssäule (300), die die obere Säule (100) und die untere Säule (200) verbindet, und
eine Sedimentations-Filtrationseinheit (500), die einen Zinkhydroxid-Aufschlämmungseinlass (501), einen Flockungsmitteleinlass (502), einen Auslass (503) für zinkreiche Schlacke und einen Auslass (504) für gefilterte Flüssigkeit aufweist und wobei der Zinkhydroxid-Aufschlämmungseinlass (501) mit dem Zinkhydroxid-Aufschlämmungsauslass (13) verbunden ist,
wobei ein Höhen-Durchmesser-Verhältnis der oberen Säule (100) in einem Bereich von 5:1 bis 25:1 liegt, vorzugsweise 10:1 beträgt,
ein Abstand zwischen einem unteren Ende des Zufuhrrohrs (11) für gemischte Aufschlämmung und dem oberen Ende der oberen Säule (100) in der Höhenrichtung optional 75 bis 80 % einer Höhe der oberen Säule (100) beträgt,
wobei ein Durchmesserverhältnis der oberen Säule (100) zur unteren Säule (200) in einem Bereich von 1,2:1 bis 2:1 liegt,
wobei eine Querschnittsfläche der Übergangssäule (300) allmählich von oben nach unten abnimmt,
ein Winkel einer Seitenwand der Übergangssäule (300) relativ zu einer vertikalen Richtung optional in einem Bereich von 25° bis 35° liegt.

2. System nach Anspruch 1, wobei eine äußere Seitenwand der Überlaufwanne (12) in der Höhenrichtung höher ist als die äußere Seitenwand der oberen Säule (100).

3. System nach Anspruch 1 bis 2, wobei die obere Säule (100) ferner einen Mittelstromauslass (17) umfasst, der an einer Seitenwand der oberen Säule (100) und unterhalb des Zinkhydroxid-Aufschlämmungsauslasses (13) in der Höhenrichtung angeordnet ist,
die obere Säule (100) optional eine Vielzahl von Mittelstromauslässen (17) umfasst, die an der oberen Säule (100) voneinander beabstandet sind,
optional die Vielzahl von Mittelstromauslässen (17) in der Höhenrichtung der oberen Säule (100) voneinander beabstandet sind.

4. System nach einem der Ansprüche 1 bis 3, wobei ein Winkel zwischen einer Projektion des Rotationswassereinlassrohrs (21) auf eine horizontale Ebene und einer Projektion des Calciumsulfat-Aufschlämmungsauslasses (22) auf die horizontale Ebene in einem Bereich von 0° bis 360° liegt, vorzugsweise 180° beträgt,
die obere Säule (100) optional mehrere Untersäulen (14) umfasst, die durch Flansche (15) verbunden sind.

5. System nach einem der Ansprüche 1 bis 4, wobei die obere Säule (100) ferner ein Wasserergänzungsrohr (18) umfasst, das sich in das Innere der oberen Säule (100) erstreckt und eine nach unten weisende Öffnung aufweist, wobei das Wasserergänzungsrohr (18) unter einem unteren Ende des Zuführrohrs (11) für gemischte Aufschlämmung, vorzugsweise direkt unter dem unteren Ende des Zuführrohrs (11) für gemischte Aufschlämmung, angeordnet ist.

6. System nach einem der Ansprüche 1 bis 5, wobei die obere Säule (100), die Übergangssäule (300) und die untere Säule (200) jeweils aus mindestens einem gefertigt sind, das aus gewöhnlichem Kohlenstoffstahl, Edelstahl und organisches Glas ausgewählt ist.

7. System nach einem der Ansprüche 1 bis 6, wobei die Überlaufwanne (12) einen Teil der äußeren Seitenwand oder die gesamte äußere Seitenwand des oberen Teils der oberen Säule (100) umgibt.

8. System nach einem der Ansprüche 1 bis 7, wobei die Übergangssäule (300) durch Schweißen mit der oberen Säule (100) verbunden ist und die Übergangssäule (300) durch Schweißen mit der unteren Säule (200) verbunden ist.

9. Verfahren zum Behandeln einer zinkhaltigen Abfallflüssigkeit unter Verwendung eines Systems nach einem der Ansprüche 1 bis 8, umfassend:
(1) Zuführen der zinkhaltigen Abfallflüssigkeit und eines Neutralisators in die Neutralisierungsvorrichtung zur Neutralisierungsbehandlung, um eine gemischte Aufschlämmung zu erhalten,
(2) Zuführen der gemischten Aufschlämmung in die Klassierungsvorrichtung zur Klassierungsbehandlung, um eine Zinkhydroxid-Aufschlämmung und eine Calciumsulfat-Aufschlämmung zu erhalten, und
(3) Zuführen der Zinkhydroxid-Aufschlämmung und eines Flockungsmittels in die Sedimentations-Filtrationseinheit zu aufeinanderfolgenden Sedimentations- und Filtrationsbehandlungen, um eine zinkreiche Schlacke und eine gefilterte Flüssigkeit zu erhalten.

10. Verfahren nach Anspruch 9, wobei die zinkhaltige Abfallflüssigkeit in Schritt (1) einen Zinkgehalt im Bereich von 120 bis 180 g/l aufweist,
die zinkhaltige Abfallflüssigkeit in Schritt (1) optional einen pH-Wert im Bereich von 0,5 bis 5,0 aufweist,
Zinkhydroxid in der Zinkhydroxid-Aufschlämmung in Schritt (2) optional eine Teilchengröße von weniger als 20,0 µm aufweist
Calciumsulfat in der Calciumsulfat-Aufschlämmung in Schritt (2) optional eine Teilchengröße von mehr als 30,0 µm aufweist
das Flockungsmittel in Schritt (3) optional in einer Menge von 10 bis 50 g pro 1 t der zinkhaltigen Abfallflüssigkeit zugegeben wird.

11. Verfahren nach Anspruch 9 oder 10, wobei der Neutralisator Kalk oder Calciumcarbidschlacke ist.

12. Verfahren nach einem der Ansprüche 9 bis 11, wobei das Flockungsmittel Polyacrylamid (PAM) oder Polyaluminiumchlorid (PAC) ist.

## Revendications

1. Système pour traiter des déchets liquides contenant du zinc, comprenant :
un dispositif de neutralisation (400), ayant une entrée de déchets liquides contenant du zinc (401), une entrée de neutralisant (402), et une sortie de bouillie mixte (403) ;
un dispositif de répartition comprenant, de haut en bas :
une colonne supérieure (100), ayant une partie supérieure ouverte et comprenant :
un tuyau d'alimentation en bouillie mixte (11), s'étendant depuis le haut de la colonne supérieure (100) dans l'intérieur de la colonne supérieure (100), et connecté à la sortie de bouillie mixte (403) ;
un bassin de débordement (12), disposé au niveau d'une paroi latérale extérieure d'une partie supérieure de la colonne supérieure (100) ; et
une sortie de bouillie d'hydroxyde de zinc (13), disposé au niveau d'une partie inférieure du bassin de débordement (12) ;
une colonne inférieure (200), comprenant :
un tuyau d'entrée d'eau rotatif (21), disposé de manière à être tangent à une paroi latérale d'une partie inférieure de la colonne inférieure (200) ; et
une sortie de bouillie de sulfate de calcium (22), disposée au-dessus du tuyau d'entrée d'eau rotatif (21) dans la direction de la hauteur, la direction de décharge de la sortie de bouillie de sulfate de calcium (22) étant tangente à une paroi latérale d'une partie supérieure de la colonne inférieure (200) ; et
une colonne de transition (300), connectant la colonne supérieure (100) et la colonne inférieure (200) ; et
une unité de sédimentation-filtration (500), ayant une entrée de bouillie d'hydroxyde de zinc (501), une entrée de floculant (502), une sortie de laitier riche en zinc (503) et une sortie de liquide filtré (504), et l'entrée de bouillie d'hydroxyde de zinc (501) étant connectée à la sortie de bouillie d'hydroxyde de zinc (13) ;
dans lequel le rapport hauteur/diamètre de la colonne supérieure (100) est dans la plage de 5/1 à 25/1, de préférence de 10/1 ;
optionnellement, dans la direction de la hauteur, la distance entre une partie inférieure du tuyau d'alimentation en bouillie mixte (11) et la partie supérieure de la colonne supérieure (100) est de 75 à 80 % de la hauteur de la colonne supérieure (100) ;
dans lequel le rapport en diamètre de la colonne supérieure (100) sur la colonne inférieure (200) est dans la plage de 1,2/1 à 2/1,
dans lequel la superficie en coupe transversale de la colonne de transition (300) diminue graduellement du haut vers le bas ;
optionnellement, l'angle d'une paroi latérale de la colonne de transition (300) par rapport à la direction verticale est dans la plage de 25° à 35°.

2. Système selon la revendication 1, dans lequel, dans la direction de la hauteur, une paroi latérale extérieure du bassin de débordement (12) est plus haute que la paroi latérale extérieure de la colonne supérieure (100) .

3. Système selon l'une quelconque des revendications 1 et 2, dans lequel la colonne supérieure (100) comprend en outre une sortie intermédiaire (17) située au niveau d'une paroi latérale de la colonne supérieure (100) et sous la sortie de bouillie d'hydroxyde de zinc (13) dans la direction de la hauteur ;
optionnellement, la colonne supérieure (100) comprend une pluralité de sorties intermédiaires (17) espacées les unes des autres sur la colonne supérieure (100) ;
optionnellement, la pluralité de sorties intermédiaires (17) sont espacées les unes des autres dans la direction de la hauteur de la colonne supérieure (100).

4. Système selon l'une quelconque des revendications 1 à 3, dans lequel l'angle entre une projection du tuyau d'entrée d'eau rotatif (21) sur un plan horizontal et une projection de la sortie de bouillie de sulfate de calcium (22) sur le plan horizontal est dans la plage de 0° à 360°, de préférence de 180° ;
optionnellement la colonne supérieure (100) comprend une pluralité de sous-colonnes (14) connectées par des brides (15).

5. Système selon l'une quelconque des revendications 1 à 4, dans lequel la colonne supérieure (100) comprend en outre un tuyau de complémentation en eau (18) s'étendant dans l'intérieur de la colonne supérieure (100) et ayant une ouverture regardant vers le bas, le tuyau de complémentation en eau (18) étant situé sous une partie inférieure du tuyau d'alimentation en bouillie mixte (11), de préférence directement sous la partie inférieure du tuyau d'alimentation en bouillie mixte (11).

6. Système selon l'une quelconque des revendications 1 à 5, dans lequel la colonne supérieure (100), la colonne de transition (300) et la colonne inférieure (200) sont chacune faites d'au moins l'un choisi parmi l'acier au carbone ordinaire, l'acier inoxydable, et le verre organique.

7. Système selon l'une quelconque des revendications 1 à 6, dans lequel le bassin de débordement (12) entoure une partie de la paroi latérale extérieure ou la totalité de la paroi latérale extérieure de la partie supérieure de la colonne supérieure (100).

8. Système selon l'une quelconque des revendications 1 à 7, dans lequel la colonne de transition (300) est connectée à la colonne supérieure (100) par soudage, et la colonne de transition (300) est connectée à la colonne inférieure (200) par soudage.

9. Procédé pour traiter des déchets liquides contenant du zinc utilisant un système selon l'une quelconque des revendications 1 à 8, comprenant :
(1) l'introduction de déchets liquides contenant du zinc et d'un neutralisant dans le dispositif de neutralisation pour un traitement de neutralisation afin que soit obtenue une bouillie mixte ;
(2) l'introduction de la bouillie mixte dans le dispositif de répartition pour un traitement de répartition afin que soient obtenues une bouillie d'hydroxyde de zinc et une bouillie de sulfate de calcium ; et
(3) l'introduction de la bouillie d'hydroxyde de zinc et d'un floculant dans l'unité de sédimentation-filtration pour des traitements de sédimentation et de filtration en séquence afin que soient obtenus un laitier riche en zinc et un liquide filtré.

10. Procédé selon la revendication 9, dans lequel, dans l'étape (1), les déchets liquides contenant du zinc ont une teneur en zinc dans la plage de 120 à 180 g/l ;
optionnellement, dans l'étape (1), les déchets liquides contenant du zinc ont une valeur de pH dans la plage de 0,5 à 5,0 ;
optionnellement, dans l'étape (2), l'hydroxyde de zinc dans la bouillie d'hydroxyde de zinc a une taille de particules inférieure à 20,0 µm ;
optionnellement, dans l'étape (2), le sulfate de calcium dans la bouillie de sulfate de calcium a une taille de particules supérieure à 30,0 µm ;
optionnellement, dans l'étape (3), le floculant est ajouté en une quantité de 10 à 50 g par tonne des déchets liquides contenant du zinc.

11. Procédé selon la revendication 9 ou 10, dans lequel le neutralisant est la chaux ou un laitier de carbure de calcium.

12. Procédé selon l'une quelconque des revendications 9 à 11, dans lequel le floculant est le polyacrylamide (PAM) ou le poly(chlorure d'aluminium) (PAC).
